# EUROPEAN PATENT SPECIFICATION

(11) **EP 2 027 726 B1**
(45) Date of publication and mention of the grant of the patent: **01.09.2010**
(21) Application number: 07729967.5
(22) Date of filing: 06.06.2007
(51) Int. Cl.: H04N 7/24

(54) **METHODS OF RECEIVING AND SENDING DIGITAL TELEVISION SERVICES**
VERFAHREN ZUM EMPFANGEN UND SENDEN VON DIGITALEN FERNSEHDIENSTEN
PROCÉDÉS DE RÉCEPTION ET D'ÉMISSION DE SERVICES DE TÉLÉVISION NUMÉRIQUE

(30) Priority: 09.06.2006 FR 0652088
(43) Date of publication of application: 25.02.2009
(73) Proprietor: Thomson Licensing, 92130 Issy-les-Moulineaux (FR)
(72) Inventor: HENRY, Jean-Baptiste, F-35520 Melesse (FR); HOUDAILLE, Rémi, F-35510 Cesson Sevigne (FR); LUBBERS, Willem, F-35510 Cesson Sevigne (FR)
(74) Representative: Le Dantec, Claude
(86) International application number: PCT/EP2007/055594
(87) International publication number: WO 2007/141303

(56) References cited:
- EP-A- 0 712 242
- US-A1- 2004 098 741
- "DIGITAL VIDEO BROADCASTING (DVB)" ETS 300 468, January 1997 (1997-01), pages 1-72, XP000980268

## Description

### 1. Field of the invention.

The present invention relates to the transmission of digital television services on a bidirectional transmission or communication network.

More precisely, the invention pertains to the field of changes of services (or "zapping").

### 2. Prior art.

According to the state of the art, switching from one digital television service to another in a receiver can take time (typically a few tenths of a second to several seconds). Specifically, the decoder must receive an image that it can decode (typically an Intra or I image according to MPEG technology, inserted into a stream of P (or "Predict" or "Predicted") images and B (or Bidirectional)) images. In order to reduce the necessary bandwidth, the number of I images is small. Furthermore, when an IP (or "Internet Protocol") network is implemented, buffer memories are used to compensate for the network jitter. Hence, a longer or shorter black screen is displayed during a change of service.

### 3. Summary of the invention.

The invention aims to alleviate the drawbacks of the prior art and in particular to improve the change from one digital television service to another.

For this purpose, the invention, which is defined by claims 1 and 11, proposes a method of receiving digital television services that is noteworthy in that it comprises a step of receiving at least one information representative of the lag in the display of a new service (in particular during the loading of a first service or during a change of service), the information being inserted into control data which comprise at least one list of services.

Thus, a receiver (for example a decoder, a television, a recording device, a communication terminal, a computer) receiving an information representative of the lag in the display of the new service can use this information to perform an action dependent on this time (for example display, fade, etc.).

According to one advantageous characteristic, the information or information representative of the lag in the display of a new service comprise a information representative of the duration of the lag in the decoding and/or transport of the new service.

According to another characteristic, it comprises a step of receiving at least one information representative of an action to be performed during the loading of a new service, the information being inserted into control data which comprise at least one list of services.

Advantageously, it comprises a step of providing at least one content to be displayed during a change of service (for example text, one or more images, video).

According to a particular characteristic, it comprises a step of choosing the content as a function of the information or information representative of the lag in the display of a new service.

Advantageously, it comprises a step of receiving at least one information representative of the content and/or of its location.

According to an advantageous characteristic, it comprises the performance of a fade during the change of service, the duration of the fade depending on the information or information representative of the lag in the display of a new service.

According to a particular characteristic, the information or information representative of the lag in the display of a new service are in an XML structure (in DVB-IP) and/or in a stream signalling table (for example SI/PSI table for DVB/MPEG).

The invention also relates to a method of sending digital television services that is noteworthy in that it comprises a step of sending at least one information representative of the lag in the display of a new service, the information being present in control data comprising at least one list of services.

According to an advantageous characteristic, the sending method comprises a step of determining the information or information as a function of the video encoding parameters (for example structure of the GOP) associated with the new service.

According to a particular characteristic, it comprises a step of determining the information or information as a function of the transport parameters of the video stream (for example size and number of buffer memories required to eliminate the network jitter) associated with the new service.

Advantageously, the sending method comprises a step of sending at least one information representative of an action to be performed by a decoder during a loading of a service, the information or information being present in control data comprising at least one list of services.

### 4. List of figures.

The invention will be better understood, and other features and advantages will become apparent on reading the description which follows, the description referring to the appended drawings among which:
- Figure 1 illustrates a system for transmitting digital television services, according to the invention;
- Figures 2 and 3 are very schematic diagrams respectively of a decoder and of a server of the system of Figure 1, implementing the invention;
- Figures 4 and 5 represent, chronologically, the data exchanges between elements of the system of Figure 1; and
- Figures 6 and 7 illustrate algorithms implemented respectively in a method of receiving and a method of sending digital television services according to the invention.

### 5. Detailed description of the invention.

In a general way, the invention makes it possible to exploit knowledge of a change-of-service time, avoiding the display of a black screen. Thus, according to various embodiments, this time, an estimate of which is sent with the list of services, can be used to display a still image, a information in text form or else moving images (the displayed content possibly depending on the service quit and/or on the new service). It can also be used for a soft change of programme by implementing a fade (or "fading") associated with one of the last images (and preferably the last) of the service quit and whose duration depends on the estimated loading time of the new service.

Information about digital television services are sent in specific structures. Thus, in the case of a monodirectional transmission (in English "broadcast") (for example on DVB-T (or "Digital Video Broadcasting - Terrestrial") or DVB-S (or DVB satellite) or else DVB-H (or "DVB-Handheld")), service lists are transmitted in the form of SI/PSI tables (from the English "System Information/Program Specific Information ") and retrieved by the decoders. With a bidirectional transmission (for example on a broadband Internet network), service lists can be transmitted in the form of SD&S structures (from the English "Service Description & Selection"). The service lists make it possible to describe services or digital television programmes and give information for finding a service and loading it.

According to the invention, known service lists are improved by inserting information into them that are representative of the loading time (or of the display lag) of a new service. Preferably, the format of the lists remains generic so as not to be tied to a particular coding technology.

By way of illustration, the MPEG coding is based on the use of GoPs (from the English "Group of Pictures"). A GoP is a sequence of various types of images, and in particular of Intral I, "Predict" P and Bidirectional B images. Only the I images can be used to start a video stream decoding, the P and B images referring directly or indirectly to an I image. Thus, if the structure of a stream has a GOP of the type IBBPBBPBBPBB, an I image is present every 12 images, i.e. every half a second. Thus, the decoder can be required to wait 0.5 s before displaying a service, the average being about 0.25 s. Thus, according to the invention, the service list comprises for at least some of the services and preferably for each service a statistical estimate of the loading time of an associated service (for example mean time or maximum time).

Within the context of a transmission on an Internet network, the loading time depends also on the transport time, for example the time necessary to fill the video buffer memories (or "buffers"), which enables them not to dry up or to overflow, these buffer memories being used on the network between a video server of the service required and the decoder. This time is generally negligible in the case of services transmitted by monodirectional RF or satellite. On the other hand, it can be of the order of 0.5 s to several seconds in the case of services transmitted on an Internet network. Thus, preferably, the statistical estimate, transmitted with the list of services, of the loading time of an associated service (for example mean time or maximum time) takes account at one and the same time of the lags associated with the decoding and of the transport parameters of the video streams corresponding to the requested service.

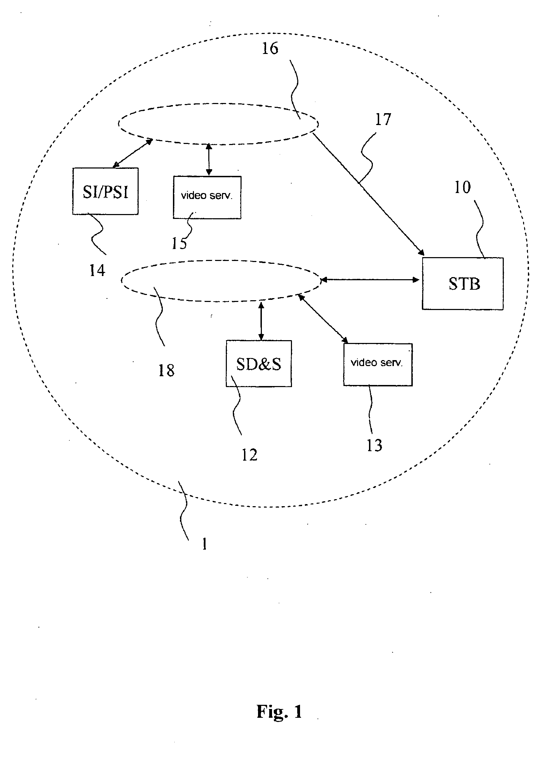

**Figure 1** schematically illustrates a system 1 for transmitting digital television services, according to a particular embodiment of the invention.

The system 1 comprises:
- a decoder 10;
- an Internet network 18 to which is linked an SD&S server 12 and a digital television server 13; and
- a monodirectional transmission network 16 to which is linked an SI/PSI server 14 and a digital television server 15.

The decoder 10 is suitable for receiving digital television services from at least one of the networks 16 or 18. The decoder is suitable for loading and decoding a service required by the user so as to display it on a television (not represented).

In order to facilitate understanding of the invention, only a decoder has been represented. Of course, the digital television streams are transmitted to numerous decoders implementing the invention. Moreover, the networks 16 and 19 can comprise several service list servers implementing the invention and several video servers. Furthermore, they can overlap, it being possible for a service list server and/or a video server to belong to both networks. Moreover, the decoder 10 can be suitable for receiving data from several distinct networks (for example DVB-T and DVB-S) and/or be connected to such networks via a gateway or a router.

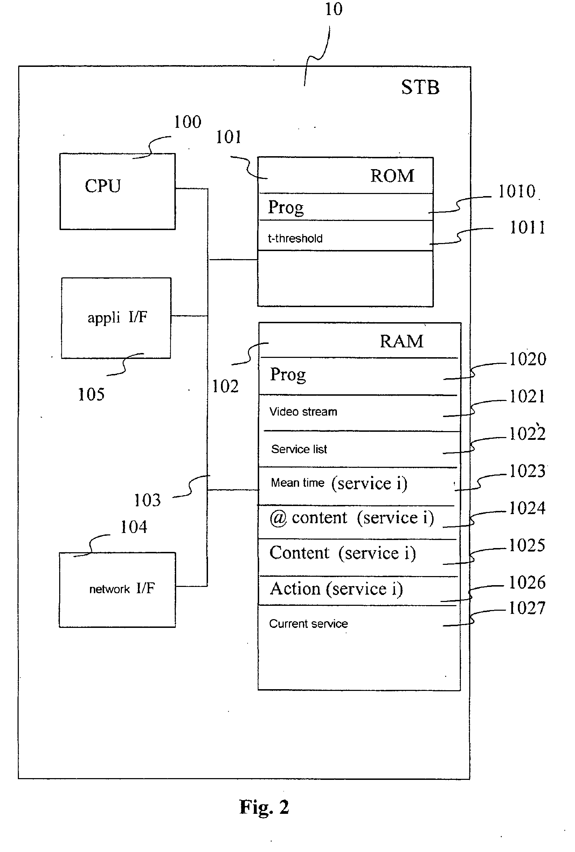

**Figure 2** schematically illustrates the decoder 10.

The decoder 10 comprises, linked together by an address and data bus 103:
- a microprocessor 100 (or CPU);
- a nonvolatile memory of ROM type (from the English "Read Only Memory") 101;
- a random access memory or RAM (from the English "Random Access Memory") 102;
- an interface 104 for receiving control data and image stream information for the networks 16 and/or 18 and, if appropriate, transmitting information or requests to the network 18; and
- an interface 105 transmitting, to the audio/video application, the content specific to the loading of a service and the audio/video data received for the service required (for example for display or recording).

Moreover, each of the elements illustrated in Figure 2 is well known to the person skilled in the art. These common elements are not described here.

It is observed that the word "register" used in the description designates in each of the memories mentioned both a memory area of small capacity (a few binary data) and a memory area of large capacity (for storing an entire program or all or some of the data representative of an audio/video service received or of a content used during the loading of a service).

The ROM memory 101 comprises in particular:
- a program "prog" 1010; and
- a temporal threshold parameter "t-threshold" 1011.

The algorithms implementing the steps of the method described hereafter are stored in the ROM memory 101 associated with the decoder 10 implementing these steps. On power-up, the microprocessor 100 loads and executes the instructions of these algorithms.

The random access memory 102 comprises in particular:
- in a register 1020, the operating program of the microprocessor 100 loaded on power-up of the decoder 10;
- a video stream corresponding to the service decoded in a register 1021;
- one or more service lists in a register 1022;
- a value of mean time associated with each service in a register 1023 updated on receipt of a service list associated with the corresponding service;
- an address of content associated with each service in a register 1024 updated on receipt of a service list associated with the corresponding service;
- a content and an action that are associated with each service in a register respectively 1025 and 1026 updated on receipt of a service list associated with the corresponding service or at any moment after the receipt of the service list or else during the loading of the service; and
- a information representative of the service requested in a register 1027.

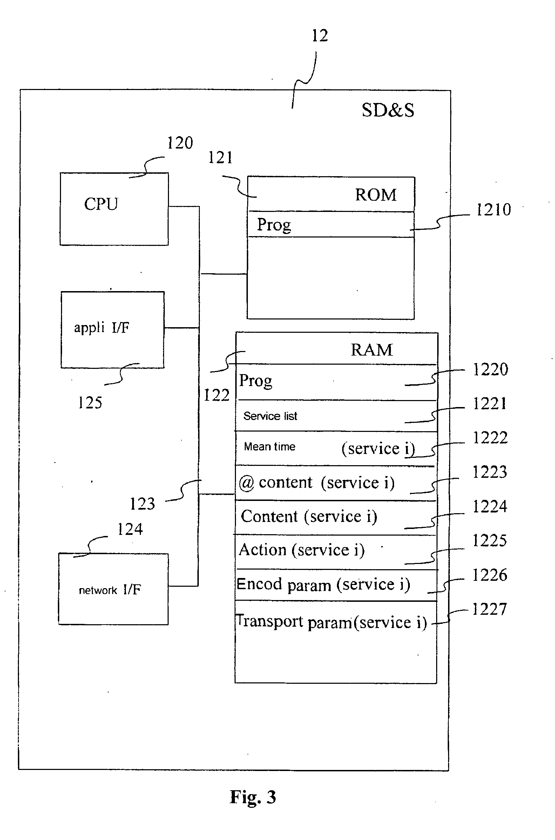

**Figure 3** schematically illustrates the server 12. Also, the server 14 has a quite similar structure.

The server 12 comprises, linked together by an address and data bus 123:
- a microprocessor 120 (or CPU);
- a nonvolatile memory of ROM type 121;
- a random access memory or RAM 102;
- an interface 124 for transmitting control data for the network 18 and, if appropriate, receiving information or requests to the network 18; and
- an application interface 125.

Moreover, each of the elements illustrated in Figure 3 is well known to the person skilled in the art. These common elements are not described here.

The ROM memory 121 comprises in particular:
- a program "prog" 1210.

The algorithms implementing the steps of the method described hereafter are stored in the ROM memory 121 associated with the server 12 implementing these steps. On power-up, the microprocessor 120 loads and executes the instructions of these algorithms.

The random access memory 122 comprises in particular:
- in a register 1220, the operating program of the microprocessor 120 loaded on power-up of the server 12;
- the service lists associated with each provider of the network 18 in a register 1221;
- a value of mean time associated with each service in a register 1222;
- an address of content associated with each service in a register 1223;
- a content (for example still image, text, moving images) associated with each service in a register 1224;
- an action (for example, loading, RSS link, fade, text, nothing, etc.) associated with each service in a register 1225;
- the video encoding parameters specific to each service in a register 1226; and
- the transport parameters specific to each service in a register 1227.

According to a variant of the invention, only some of the services have associated values of mean time and/or an associated content and/or an address of associated content. It is possible to define a default value of these data indicating an empty field in the memory 122 to take this aspect into account.

According to another variant, the registers 1023 to 1025 are not used, the corresponding values being written directly to the list 1022.

According to yet another variant that may be combined with the previous variants, the register 1023 comprises in place of or in addition to the mean time, a minimum or maximum time associated with each service.

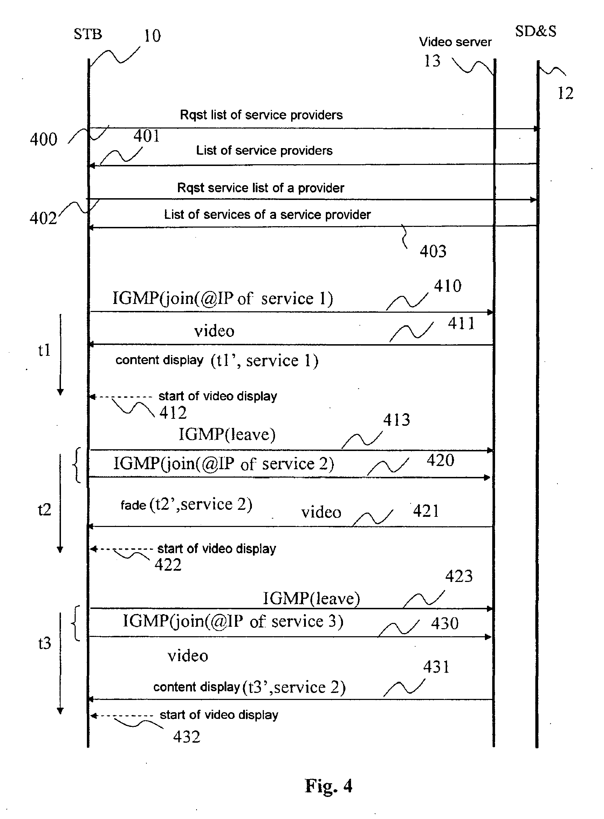

**Figure 4** represents, chronologically, the data exchanges between the decoder 10, the video server 13 and the SD&S server 12.

During a first step, the decoder 10 sends the server 12 a request 400 to obtain the list of services according to an SD&S protocol.

Thereafter, the server 12 sends it the list 401 of service providers.

Then, the decoder 10 sends the server 12 a request 402 asking for the list of the services of a particular provider (for example the server 13).

The server 12 sends the list 403 of the required services as stored in the register 1221, this list 403 being in the form of an XML structure (from the English "eXtensible Markup Language") and the decoder 10 stores this list in the register 1022 with the information associated with the loading time and with the content that are associated with the services of the list when they are provided.

Then, the decoder 10 sends the server 13 an IGMP command 410 (from the English "Internet Group Management Protocol") requesting a particular service ("join" command according to the IGMP protocol with IP address of the service) and receives the video stream 411. When loading of the service required is requested by the user, the decoder 10 displays the content (after a possible test of the mean loading time *t'1* associated with the service required), the content and the mean time being associated with the service required and being indicated in the list 403. This content is displayed for a time *t1* until the service is loaded and available for the application (*t1* being equal to the duration separating the transmission of the command 410 from the moment 412 when the first image of the service required is decoded).

The command 410 described above is sent in request-response mode at the behest of the decoder 10. It is preferably regularly refreshed on the initiative of the server 12 ("push" mode).

Thereafter, following a change of service request from a user, the decoder 10 sends the server 13 an IGMP command 413 of "leave" type to quit the current service and an IGMP command 420 requesting a new particular service (command of the "join" type with IP address of the new service) and receives the video stream 421. Here, for example, an image fade is assumed, starting from one of the last images (and preferably the last image) of the previous service when one of the commands 413 or 420 was issued (sent practically simultaneously), the duration of the fade being calculated as a function of the mean (or maximum) time *t'2* associated with the loading of the service required and as provided in the service list 403. A fade is, for example, tied to an explicit command associated with the service requested in the list 403, to a time t'2 less than the threshold 1011 or to an absence of content to be displayed during the loading of the new service in the list 403. One of the last images of the previous service is therefore displayed for a time *t2* until the new service is loaded and available for the application (*t2* being equal to the duration separating the transmission of one of the commands 413 or 420 from the moment 422 when the first image of the service required is decoded).

Then, the decoder 10 sends the server 13 an IGMP command 423 of "leave" type to quit the current service and an IGMP command 430 requesting a new particular service (command of the "join" type with IP address of the new service) and receives the video stream 431. When loading of the service required is requested by the user, the decoder 10 displays the content (after a possible test of the mean loading time *t'3* associated with the service required), the content being associated with the quit service and the mean time being associated with the service required. Specifically, according to the invention, the displayed content can depend on the quit service (for example, by parametrization or indication in the list of services 403). This content is displayed for a time *t3* until the service is loaded and available for the application (*t3* being equal to the duration separating the transmission of one of the commands 423 or 430 from the moment 432 when the first image of the service required is decoded).

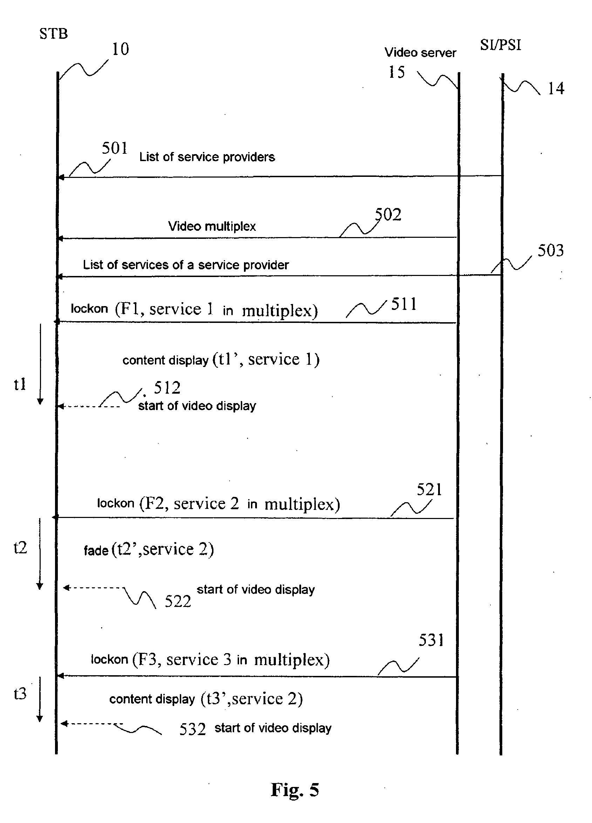

**Figure 5** represents, chronologically, the data sent by the video server 15 and the SI/PSI server 14 to the decoder 10 via a monodirectional transmission network.

During a first step, the server 14 sends the decoder 10 the list 501 of service providers.

Then or in parallel the video server 15 transmits video multiplexes 502 to the decoder 10.

Thereafter, the server 14 sends the list or lists 503 of the available services, this or these lists 503 being in the form of one or more SI/PSI tables and the decoder 10 stores this list in the register 1022 with the information associated with the loading time and with the content that are associated with the services of the list or lists when they are provided.

Then, as a function of the user's requirements, the decoder 10 locks (operation 511) on to the frequency (via its tuner, not represented in Figure 2) and the multiplex of the service required in the video stream transmitted by the server 15. The decoder 10 displays the content (after a possible test of the mean loading time *t'1* associated with the service required), the content and the mean time being associated with the service required and indicated in the list or lists 503. This content is displayed for a time *t1* until the service is loaded and available for the application (*t1* being equal to the duration separating the start of lockon 511 from the moment 512 when the first image of the service required is decoded).

Thereafter, following a change of service request from a user, the decoder 10 locks (operation 521) on to the frequency (if a change of frequency is necessary) and the multiplex of the new service required in the video stream sent by the server 15. Here, for example, an image fade is assumed, starting from one of the last images (and preferably the last image) of the previous service at the moment that start of lockon is instigated, the duration of the fade being calculated as a function of the mean (or maximum) time *t'2* associated with the loading of the service required and as provided in the service list 503. A fade is, for example, tied to an explicit command associated with the service requested in the list or lists 503, to a time t'2 less than the threshold 1011 or to an absence of content to be displayed during the loading of the new service in the list 503. One of the last images of the previous service is therefore displayed for a time *t2* until the new service is loaded and available for application (*t2* being equal to the duration the start of lockon 521, of the moment 522 when the first image of the service required is decoded).

Then, following a change of service request from a user, the decoder 10 locks (operation 531) on to the frequency (if a change of frequency is necessary) and the multiplex of the new service required in the video stream sent by the server 15. When loading of the service required is requested by the user, the decoder 10 displays the content (after a possible test of the mean loading time *t'3* associated with the service required), the content being associated with the quit service and the mean time being associated with the service required. This content is displayed for a time *t3* until the service is loaded and available for application (*t3* being equal to the duration separating the start of lockon 521 from the moment 532 when the first image of the service required is decoded).

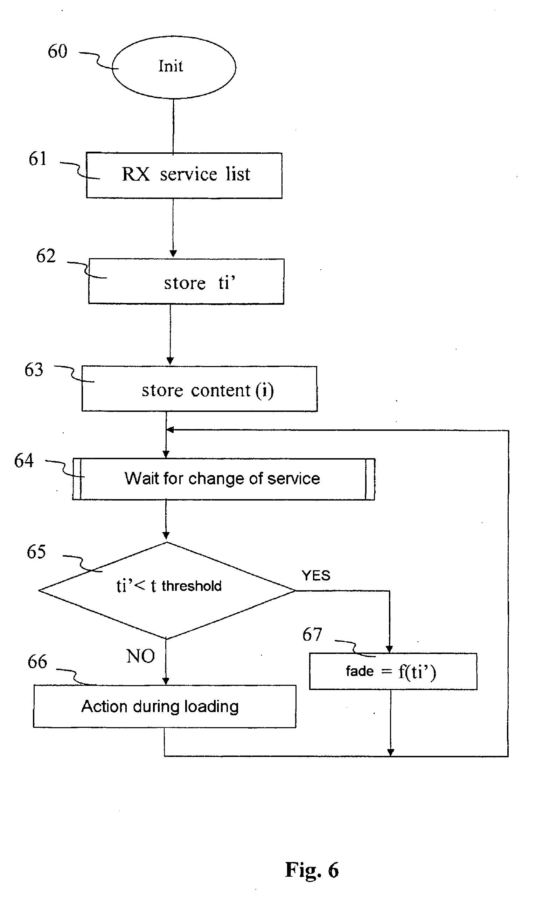

**Figure 6** illustrates an algorithm corresponding to a reception method implemented in the receiver 10, according to the invention.

In the course of a first initialization step 60, the decoder 10 loads the program 1010 into random access memory 102 and initializes the various parameters necessary for it to operate properly.

Then, in the course of a step 61, the decoder 10 receives from the SD&S server 12 and/or the IF/SPI server 14 one or more service lists that it stores in its register 1022.

Thereafter, in the course of a step 62, it extracts and stores in the register 1023 the temporal data associated with each service present in the lists received in step 61 (typically the minimum, mean and/or maximum times corresponding to the loading of the service).

Then, in the course of a step 63, when they are present, the decoder extracts the data relating to a content and/or an action to be performed, these data being associated with each service present in the lists received in step 61, and stores them in the registers 1024 and/or 1025.

According to a variant embodiment, these data stored in steps 62 and 63 are presented to the user (or to the client application of the decoder) with the available services.

Steps 61 and 63 are performed when turning on the decoder 10, and, also, on receipt of an update of a service list and/or of a new service list.

Thereafter, in the course of a step 64, the decoder awaits then receives an instruction from a user or from its client application requesting the loading of a first or of a new service belonging to a list received during step 61.

Then, in the course of a test 65, the decoder 10 verifies whether the estimated loading time for the service is less than a threshold value 1011 (which equals for example 0.5 s) (mean, minimum or maximum time read from the register 1023 associated with the desired service).

If it is, it is assumed that the user does not have time to take into account a content of image or text type during loading and, in the course of a step 67, a fade (associated with one of the last decoded images) whose duration is calculated as a function of the estimated time is instigated.

If it is not, in the course of a step 66, the decoder 10 performs the action associated with the loading of the new service (for example, display or provision to a display (monitor or television for example) of a still image or of a film, display of a text, display of an RSS information, fade, etc.). Should there be no action associated with this new service in the list 1022 received, the decoder 10 performs the action associated with the previous service or a default action (for example display of an image or of a series of locally recorded images (for example cursor indicating a loading and whose speed depends on the estimated time) or remote action (for example advertisement present at a specific Web address or in the transmitted stream, it being possible for this address or the file sought to depend on the estimated loading time mentioned in the list 1022), of a text that is predefined or dependent on the new service (for example "loading of the service with name of the service and/or estimated time of the loading mentioned in the list 1022).

According to a variant of the invention, steps 65 and 67 are deleted and step 66 is performed systematically after step 64.

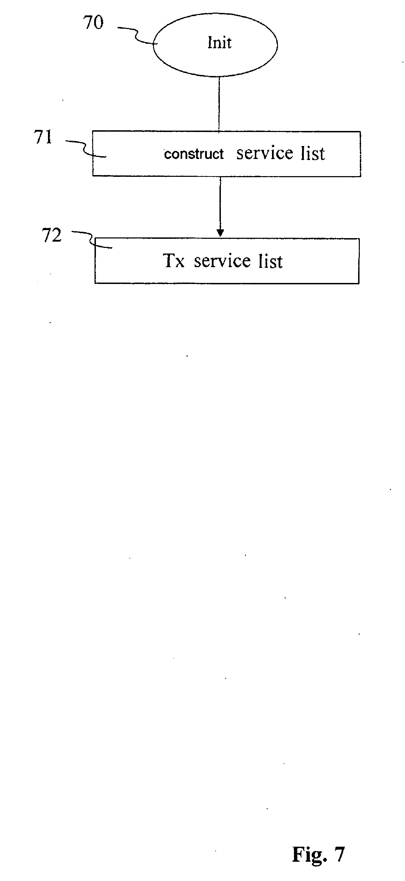

**Figure 7** illustrates an algorithm corresponding to a service list sending method implemented in the list servers 12 and/or 14, according to the invention.

In the course of a first initialization step 70, the server loads the program 1210 into random access memory 122 and initializes the various parameters necessary for it to operate properly (in particular address of the video servers).

Then, in the course of a step 71, the server constructs one or more service lists to be transmitted to the decoders. The service list or lists and the video servers are parametrized by the operator and are therefore directly accessible. Thereafter, the list server retrieves, for each available service, the GOP of the corresponding encoder (which may be different from the video servers 13 and 15 and which is known to the list server). It deduces therefrom the minimum, mean and/or maximum decoding times. Then, depending on the transmission mode, it estimates the transport time. A default value can be predefined (for example 500 ms when sending via the Internet and 0 ms for a monodirectional transmission). According to a more complex variant, the list server 12 estimates the jitter for the sending of services from the server 13 using for example the RTCP protocol ("Real Time Control Protocol") as return path so as to retrieve information about the state of the network and in particular the jitter. The list server computes the sum of the minimum, mean and/or maximum times and inserts it into the information associated with each service in the list or lists 1221 that it constructs. According to a variant, the list server does not compute this sum and inserts separately the times corresponding to the decoding and transport parameters respectively, into the information associated with each service in the list or lists 1221 that it constructs, the decoder deducing the total time therefrom. According to another variant, these data are not expressed in seconds, but respectively as a minimum, mean and/or maximum number of GOPs and/or number or size of buffer memories (or "buffers") between the video server and the decoder 10 (it being possible for the crossing of a buffer memory to be parametrized in the decoder 10 (for example 100 ms) or estimated more finely). The action and any data associated with a loading of services can be parametrized or retrieved by the list server at a predefined address (local or remote) at a frequency or instants that are also parametrized (it being possible for the content of a news item or of an advertisement to be regularly modified).

Thereafter, during a step 72, the list server transmits or sends the list or lists constructed in the course of step 71 to the decoder or decoders. Steps 71 and 72 are implemented when turning on the server and whenever necessary (in particular when there are changes in the content of the lists (in particular in a periodic manner and/or a change of available services, a change in the actions to be performed by a decoder during the loading of a new service or a change in the encoding or transport parameters of at least one service).

Of course, the invention is not limited to the embodiments described above.

The nature and number of the list servers are in particular not limited to the examples illustrated above. In particular, the service lists can be constructed and/or sent by one or more list servers of interactive transmission type or, conversely, monodirectional type, via any wire or wireless communication means.

Nor are the actions associated with a service limited to the actions described above - they relate to any type of action possible in the course of loading a service.

The estimated temporal data are not necessarily the estimated mean times but can also, according to the invention, be associated with minimum or maximum values or correspond to an intermediate value (for example valid maximum value with a probability of 0.95). The service list sent can comprise all or some of these values. The decoder can then choose the value that it will take into account to perform an action (for example by parametrization).

The user of a decoder or the associated application can also, according to the invention, forbid certain actions (for example advertisement display and/or image display if the estimated loading time is less than a threshold) and then perform a default action or an action corresponding to a previous service. He can also configure the decoder so that it downloads or records a specific content during the loading of a service (for example, a news item via an RSS link).

According to an advantageous embodiment of the invention, all the service lists sent or the control data comprising them comprise an estimated loading time and/or an action to be performed by the decoder during loading, for each service. According to variants of the invention, these data of estimated loading time and/or of action to be performed are sent for only some of the services present. According to another variant of the invention, these data are associated with a list and sent once with the corresponding list, all the services of the list being associated with the estimated time (times) of loading and/or with the action to be performed during loading. The decoder then associates these information with the whole set of services concerned. According to a particular implementation of this variant, a Boolean is associated with each service to indicate whether the loading parameters do or do not have be associated with it.

The invention is not limited to decoders (or "set top box") on the reception side but relate to any receiver suitable for receiving and decoding service lists and service streams, and in particular decoders, televisions, recording devices, communication terminals, and computers comprising reception and decoding means.

### Annex.

An example of XML coding of a service list is illustrated hereafter within the context of a bidirectional transmission on an Internet network. In this list, the additions with respect to an SD&S list according to the state of the art are indicated in bold. By way of example, three services are described with the aid of a parameter called *AverageRenderingTime*, which represents the mean loading time of the corresponding service, and an optional parameter called *TemporaryScreen*, which either indicates the location of a content to be displayed during the loading of the corresponding service or directly contains the content to be displayed.

For a first service, the list indicates a mean loading time equal to 1200 ms, the unit (ms) (according to the instruction "*AverageRenderingTime Unit=*") and the time (1200) (according to the instruction "*Value* =") being indicated explicitly. For this service, the list also indicates a location at an Internet address of an image to be downloaded during the loading of the service (according to the instruction "*TemporaryScreen Type*", which indicates a content of link (or address) type and a "Value" field which explicitly mentions the Internet address *http:llwww.provider1.com*/*zappingAd5002.jpg*).

For a second service, the list indicates a mean loading time equal to 800 ms (according to the instruction AverageRenderingTime Unit="ms" Value="800"). For this service, the list does not indicate any explicit content to be used during its loading.

For a third service, the list indicates a mean loading time equal to 1500 ms, the unit (ms) (according to the instruction "*AverageRenderingTime Unit*="*ms*" *Value*="*1500*"). For this service, the list also indicates a content of text-to-be-displayed type (according to the instruction "*TemporaryScreen Type*", which indicates a content of text type and a "Value" field which contains the text characters of the message to be displayed on the screen). The displayed text can be a real-time news text (depending on the refreshing of the service lists) or delayed text, an advertisement text, a message indicating a change of service or any other information.

For a fourth service, the list indicates a mean loading time equal to 600 ms. For this service, the list also indicates a link of RSS type (from the English "Really Simple Syndication") (according to the instruction "*TemporaryScreen Type* = "*RSS*" ", which indicates a content of RSS-link type and a "Value" field which explicitly mentions the Internet address *http:llwww.provider3.com*/*Rssnews.xml*).

For a fifth service, the list indicates a mean loading time equal to 600 ms. For this service, the list also indicates an action of fade type (according to the instruction "*TemporaryScreen Type* = "*fade*"".

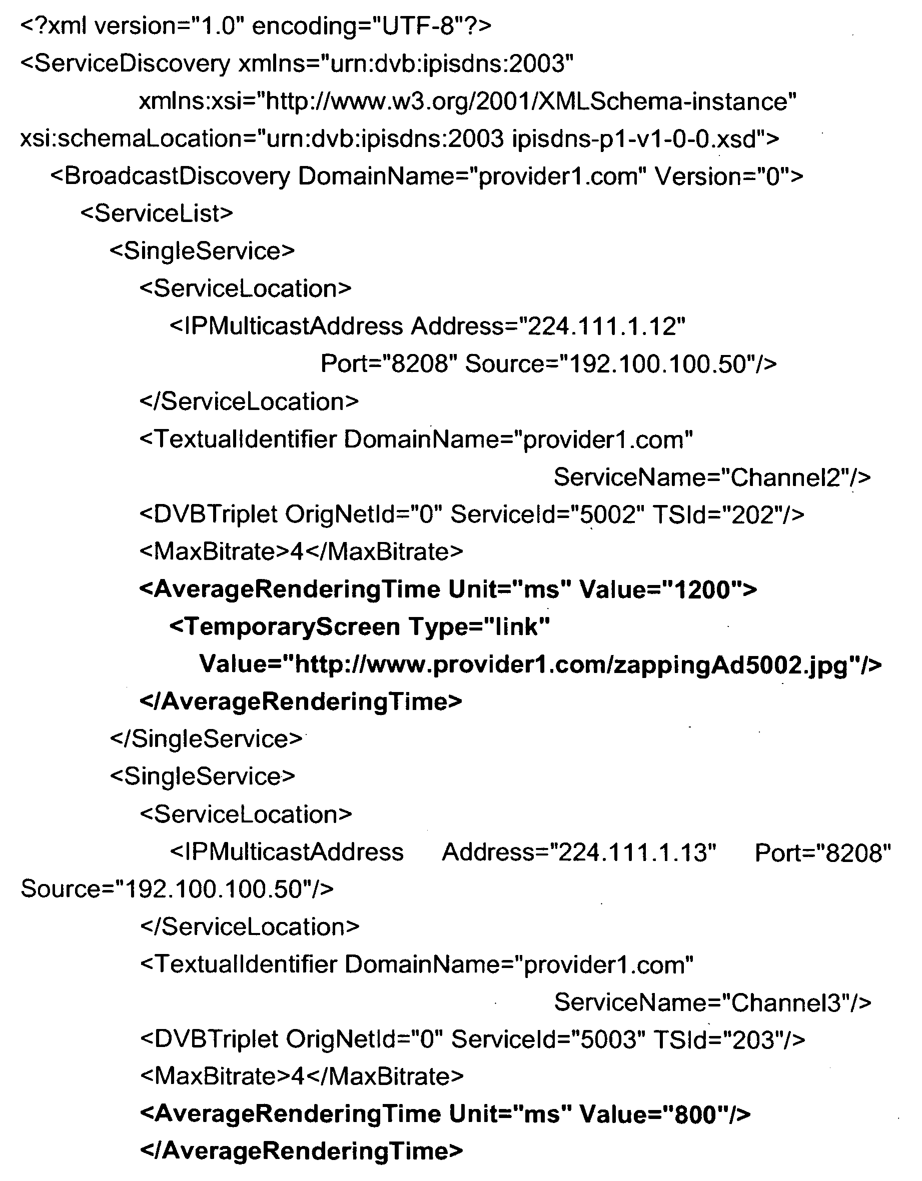

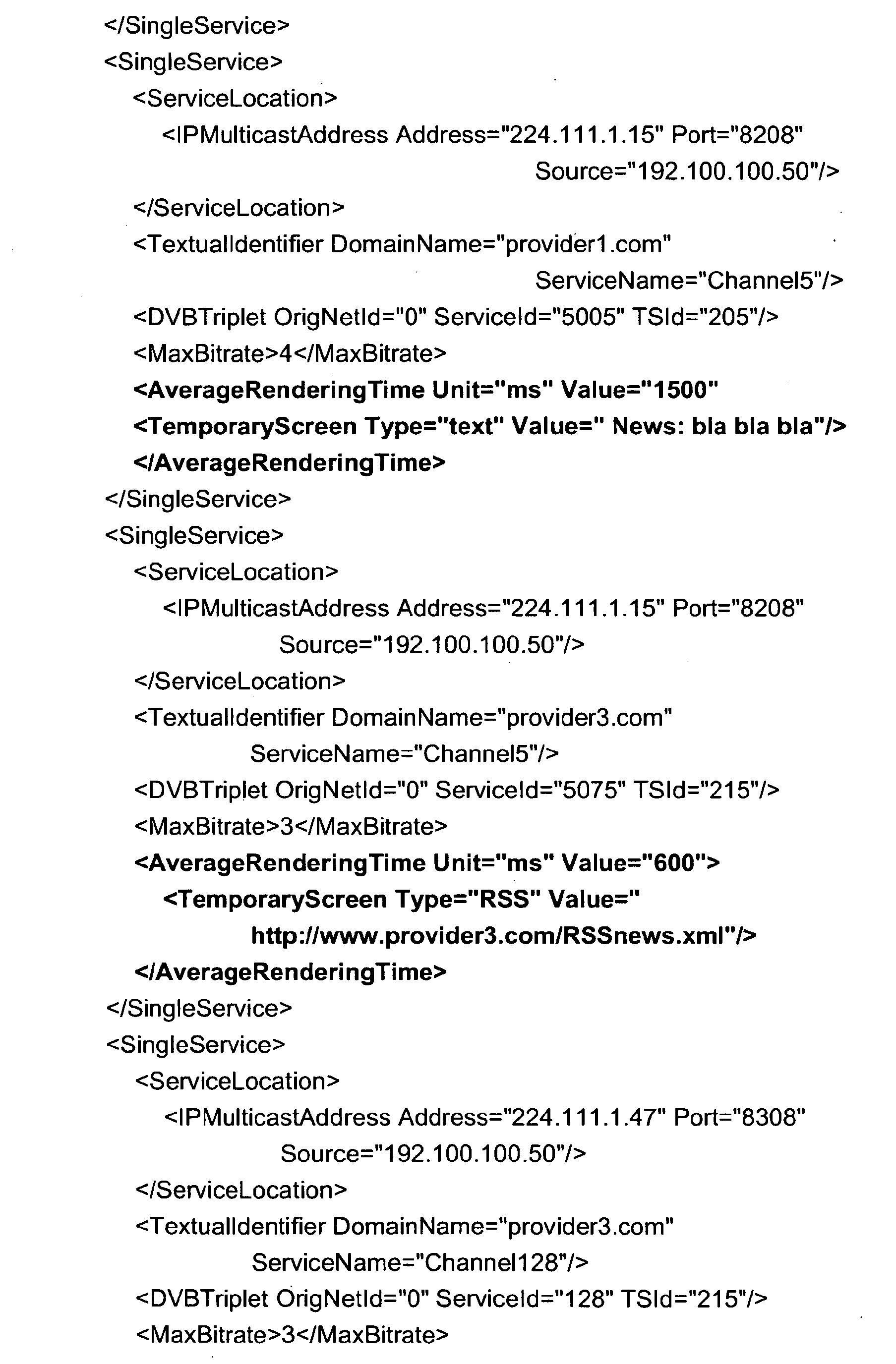

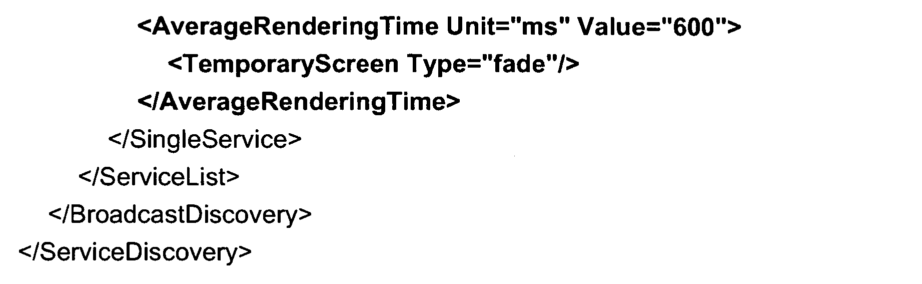

In a monodirectional transmitted mode, the service lists are sent in the SI/PSI form into which are inserted fields equivalent to those indicated above, envisaging, for example, a structure of the type:
- presence indicator for a descriptor tied to the loading of the service (Boolean set to 1 if the descriptor is present);
- descriptor comprising:
   - a unit on 4 bits (for example 0000 for ms);
   - a value on 16 bits;
   - a temporary screen type on 8 bits (for example 0x00 (in hexadecimal notation) set to 0x03 signifying respectively link, text, image, RSS, etc.);
   - a content size of the field associated with the temporary screen on 20 bits;
   - the content of the field associated with the temporary screen (for example http://www.provider1.com/zappingAd5002.jpg, which is coded on 42 bytes).

## Claims

1. Method of receiving digital television services, **characterized in that** it comprises a step (61) of receiving at least one information representative of an estimation of a loading time of a new service, representative of the lag (1023) in the display of the new service, the said information being inserted into control data which comprise at least one list of services (1022).

2. Method according to Claim 1, **characterized in that** said at least one information representative of an estimation of a loading time of a new service takes into account a lag associated with decoding of the new service.

3. Method according to Claim 1 or 2, **characterized in that** said at least one information representative of an estimation of a loading time of a new service takes into account a lag associated with transport of the new service.

4. Method according to any one of Claims 1 to 3, **characterized in that** said at least one information representative of an estimation of a loading time of a new service takes into account network jitter.

5. Method according to any one of Claims 1 to 4, **characterized in that** it comprises a step of receiving at least one information representative of an action (1026) to be performed during the loading of a new service, the said information being inserted into control data which comprise at least one list of services.

6. Method according to any one of Claims 1 to 5, **characterized in that** it comprises a step of providing at least one content (1024, 1025) to be displayed during a change of service.

7. Method according to Claim 6, **characterized in that** it comprises a step of choosing content to be displayed during a change of service as a function of the said at least one information representative of an estimation of a loading time of a new service.

8. Method according to either of Claims 6 and 7, **characterized in that** it comprises a step of receiving at least one information representative of the said content (1025) and/or of its location (1024).

9. Method according to any one of Claims 1 to 8, **characterized in that** it comprises a conditional performance of a fade (67) step during the change of service, a duration of the fade depending on said at least one information representative of an estimation of a loading time of a new service, said fade step being performed under condition comprising:
- presence of an explicit command associated with the new service; and/or
- said information representative of an estimation a loading time of a new service is below a threshold; and/or
- absence of content to be displayed during loading of the new service.

10. Method according to any one of Claims 1 to 9, **characterized in that** the said at least one information representative of an estimation of a loading time of a new service is in an XML structure and/or in a stream signalling table.

11. Method of sending digital television services, **characterized in that** it comprises a step (72) of sending at least one information representative of an estimation of a loading time of a new service, representative of the lag (1023) in the display of the new service, said information being inverted into control data comprising at least one list of services.

12. Method according to Claim 11, **characterized in that** said at least one information representative of an estimation of a loading time of a new service takes into account a lag associated with decoding of the new service.

13. Method according to Claim 11 or 12, **characterized in that** said at least one information representative of an estimation of a loading time of a new service takes into account a lag associated with transport of the new service.

14. Method according to any one of Claims 11 to 13, **characterized in that** said at least one information representative of an estimation of a loading time of a new service takes into account network jitter.

## Patentansprüche

1. Verfahren zum Empfangen von digitalen Fernsehdiensten, **dadurch gekennzeichnet, dass** es einen Schritt (61) zum Empfangen mindestens einer Information, die eine Schätzung einer Ladezeit eines neuen Dienstes repräsentiert, umfasst, die die Verzögerung (1023) bei der Anzeige des neuen Dienstes repräsentiert, wobei die Information in Steuerdaten eingefügt ist, die mindestens eine Liste von Diensten (1022) umfassen.

2. Verfahren nach Anspruch 1, **dadurch gekennzeichnet, dass** die mindestens eine Information, die eine Schätzung einer Ladezeit eines neuen Dienstes repräsentiert, eine dem Decodieren des neuen Dienstes zugeordnete Verzögerung berücksichtigt.

3. Verfahren nach Anspruch 1 oder 2, **dadurch gekennzeichnet, dass** die mindestens eine Information, die eine Schätzung einer Ladezeit eines neuen Dienstes repräsentiert, eine dem Transport des neuen Dienstes zugeordnete Verzögerung berücksichtigt.

4. Verfahren nach einem der Ansprüche 1 bis 3, **dadurch gekennzeichnet, dass** die mindestens eine Information, die eine Schätzung einer Ladezeit eines neuen Dienstes repräsentiert, Netz-Jitter berücksichtigt.

5. Verfahren nach einem der Ansprüche 1 bis 4, **dadurch gekennzeichnet, dass** es einen Schritt des Empfangens mindestens einer Information umfasst, die eine während des Ladens eines neuen Dienstes auszuführende Aktion (1026) repräsentiert, wobei die Information in Steuerdaten eingefügt ist, die mindestens eine Liste von Diensten umfassen.

6. Verfahren nach einem der Ansprüche 1 bis 5, **dadurch gekennzeichnet, dass** es einen Schritt des Bereitstellens mindestens eines während einer Änderung des Dienstes anzuzeigenden Inhalts (1024, 1025) umfasst.

7. Verfahren nach Anspruch 6, **dadurch gekennzeichnet, dass** es einen Schritt des Wählens des während einer Änderung des Dienstes angezeigten Inhalts in Abhängigkeit von der mindestens einen Funktion, die eine Schätzung einer Ladezeit eines neuen Dienstes repräsentiert, umfasst.

8. Verfahren nach einem der Ansprüche 6 und 7, **dadurch gekennzeichnet, dass** es einen Schritt des Empfangens mindestens einer Information, die den Inhalt (1025) und/oder seinen Ort (1024) repräsentiert, umfasst.

9. Verfahren nach einem der Ansprüche 1 bis 8, **dadurch gekennzeichnet, dass** es eine zusätzliche Ausführung eines Abblend-(67)-Schritts während der Änderung des Dienstes umfasst, wobei eine Dauer des Abblendens von der mindestens einen Information abhängt, die eine Schätzung einer Ladezeit eines neuen Dienstes repräsentiert, wobei der Abblendschritt unter der Bedingung ausgeführt wird, die umfasst:
- Anwesenheit eines expliziten dem neuen Dienst zugeordneten Befehls; und/oder
- die Information, die eine Schätzung einer Ladezeit eines neuen Dienstes repräsentiert, liegt unter einem Schwellenwert; und/oder
- Abwesenheit von während des Ladens des neuen Dienstes anzuzeigendem Inhalt.

10. Verfahren nach einem der Ansprüche 1 bis 9, **dadurch gekennzeichnet, dass** die mindestens eine Information, die eine Schätzung einer Ladezeit eines neuen Dienstes repräsentiert, in einer XML-Struktur und/oder in einer Stromsignalisierungstabelle steht.

11. Verfahren zum Senden von digitalen Fernsehdiensten, **dadurch gekennzeichnet, dass** es einen Schritt (72) zum Senden mindestens einer Information, die eine Schätzung einer Ladezeit eines neuen Dienstes repräsentiert, umfasst, die die Verzögerung (1023) in der Anzeige des neuen Dienstes repräsentiert, wobei die Information in Steuerdaten eingefügt ist, die mindestens eine Liste von Diensten umfassen.

12. Verfahren nach Anspruch 11, **dadurch gekennzeichnet, dass** die mindestens eine Information, die eine Schätzung einer Ladezeit eines neuen Dienstes repräsentiert, eine der Decodierung des neuen Dienstes zugeordnete Verzögerung berücksichtigt.

13. Verfahren nach Anspruch 11 oder 12, **dadurch gekennzeichnet, dass** die mindestens eine Information, die eine Schätzung einer Ladezeit eines neuen Dienstes repräsentiert, eine dem Transport der neuen Vorrichtung zugeordnete Verzögerung berücksichtigt.

14. Verfahren nach einem der Ansprüche 11 bis 13,
**dadurch gekennzeichnet, dass** die mindestens eine Information, die eine Schätzung einer Ladezeit eines neuen Dienstes repräsentiert, Netz-Jitter berücksichtigt.

## Revendications

1. Procédé de réception de services de télévision numérique, **caractérisé en ce qu'**il comprend une étape de réception (61) d'au moins une information représentative d'une estimation d'un temps de chargement d'un nouveau service, représentative du délai d'affichage (1023) du nouveau service, ladite information étant insérée dans des données de contrôle qui comprennent au moins une liste de services (1022).

2. Procédé selon la revendication 1, **caractérisé en ce que** ladite au moins une information représentative d'une estimation d'un temps de chargement d'un nouveau service prend en compte un délai associé au décodage du nouveau service.

3. Procédé selon la revendication 1 ou 2, **caractérisé en ce que** ladite au moins une information représentative d'une estimation d'un temps de chargement d'un nouveau service prend en compte un délai associé au transport du nouveau service.

4. Procédé selon l'une quelconque des revendications 1 à 3, **caractérisé en ce que** ladite au moins une information représentative d'une estimation d'un temps de chargement d'un nouveau service prend en compte la gigue réseau.

5. Procédé selon l'une quelconque des revendications 1 à 4, **caractérisé en ce qu'**il comprend une étape de réception d'au moins une information représentative d'une action (1026) à effectuer lors du chargement d'un nouveau service, ladite information étant insérée dans des données de contrôle qui comprennent au moins une liste de services.

6. Procédé selon l'une quelconque des revendications 1 à 5, **caractérisé en ce qu'**il comprend une étape de fourniture d'au moins un contenu (1024, 1025) à afficher pendant un changement de service.

7. Procédé selon la revendication 6, **caractérisé en ce qu'**il comprend une étape de choix dudit contenu à afficher pendant un changement de service en fonction de ladite au moins une information représentative d'une estimation de temps de chargement d'un nouveau service.

8. Procédé selon l'une quelconque des revendications 6 et 7, **caractérisé en ce qu'**il comprend une étape de réception d'au moins une information représentative dudit contenu (1025) et/ou de son emplacement (1024).

9. Procédé selon l'une quelconque des revendications 1 à 8, **caractérisé en ce qu'**il comprend une réalisation conditionnelle d'une étape de fondu (67) pendant le changement de service, une durée du fondu dépendant de ladite au moins une information représentative d'une estimation du temps de chargement d'un nouveau service, ladite étape de fondu étant réalisée sous condition comprenant :
- présence d'une commande explicite associée au nouveau service ; et/ou
- ladite information représentative d'une estimation de temps de chargement d'un nouveau service est en dessous d'un seuil ; et/ou
- absence de contenu à afficher pendant le chargement du nouveau service.

10. Procédé selon l'une quelconque des revendications 1 à 9, **caractérisé en ce que** ladite au moins une information représentative d'une estimation du temps de chargement d'un nouveau service est dans une structure XML et/ou dans une table de signalisation du flux.

11. Procédé d'émission de services de télévision numérique, **caractérisé en ce qu'**il comprend une étape d'émission (72) d'au moins une information représentative d'une estimation d'un temps de chargement d'un nouveau service, représentative du délai d'affichage (1023) du nouveau service, ladite information étant présente dans des données de contrôle comprenant au moins une liste de services.

12. Procédé selon la revendication 11, **caractérisé en ce que** ladite au moins une information représentative d'une estimation d'un temps de chargement d'un nouveau service prend en compte un délai associé au décodage du nouveau service.

13. Procédé selon la revendication 11 ou 12, **caractérisé en ce que** ladite au moins une information représentative d'une estimation d'un temps de chargement d'un nouveau service prend en compte un délai associé au transport du nouveau service.

14. Procédé selon la revendication 11 à 13, **caractérisé en ce que** ladite au moins une information représentative d'une estimation d'un temps de chargement d'un nouveau service prend en compte de la gigue réseau.
